Europäisches Patentamt

European Patent Office

Office européen des brevets

(19)

(11) Veröffentlichungsnummer : **0 386 402 B1**

(12) **EUROPÄISCHE PATENTSCHRIFT**

(45) Veröffentlichungstag der Patentschrift :
**16.09.92 Patentblatt 92/38**

(51) Int. Cl.⁵ : **A01G 9/12**

(21) Anmeldenummer : **90100346.7**

(22) Anmeldetag : **09.01.90**

(54) Bausatz zur Bildung eines Gitter-/Raumtragwerkes.

(30) Priorität : **25.02.89 DE 8902264 U**

(43) Veröffentlichungstag der Anmeldung :
**12.09.90 Patentblatt 90/37**

(45) Bekanntmachung des Hinweises auf die
Patenterteilung :
**16.09.92 Patentblatt 92/38**

(84) Benannte Vertragsstaaten :
**AT BE CH DE DK ES FR GB GR IT LI LU NL SE**

(56) Entgegenhaltungen :
**DE-A- 3 329 035**
**GB-A- 601 698**
**US-A- 4 067 547**

(73) Patentinhaber : **Werler Drahtwerke GmbH &**
**Co. KG**
**Runtestrasse 5-9 + 24**
**W-4760 Werl (DE)**

(72) Erfinder : **Wucherpfennig, Dieter, Prof.-Dr.-Ing.**
**Am Schussholz 30**
**W 4630 Bochum (DE)**

(74) Vertreter : **Patentanwälte Meinke und**
**Dabringhaus Dipl.-Ing. J. Meinke Dipl.-Ing. W.**
**Dabringhaus**
**Westenhellweg 67**
**W-4600 Dortmund 1 (DE)**

EP 0 386 402 B1

## Beschreibung

Die Erfindung richtet sich auf einen Bausatz zur Bildung eines Gitter-/Raumtragwerkes, insbesondere zur Bildung eines Rankgerüstes für Kletter- oder Rankpflanzen, welches aus aus Metalldrahtgittern gebildeten, miteinander verbindbaren Einzelelementen besteht.

Derartige Einrichtungen, z.B. zum Halten von Kletterpflanzen, sind in unterschiedlichen Bauarten bekannt. So zeigt beispielsweise die DE-C-37 06 878 eine Haltevorrichtung für Kletterpflanzen zum Aufbau in Gärten, Parks und Anlagenflächen aus säulenförmigen und bogenförmigen Elementen mit unterschiedlich gestalteten Verbindungsköpfen zum Verschrauben benachbarter Elemente miteinander. Einen ähnlichen Aufbau, allerdings mit anderen Verbindungsköpfen an den Einzelelementen, zeigt die DE-A-32 43 749, einen Mehrecksäulenquerschnitt zeigen die DE 33 29 036-A und die DE 33 29 035-A.

Weitere Lösungen für Gitterwerke bzw. Klettergerüste für Pflanzen sind beispielsweise noch aus der DE-A-28 01 004 dem Gebrauchsmuster DE-U-I 896 783 oder dem Gebrauchsmuster DE-U-82 83 I94 bekannt. Ein Gitterwerk als Zaunkonstruktion mit Entwicklungselementen, die auf die freien Enden von Drähten geschoben sind, zeigt die US-A-4 067 547 während die US-A-3 04I 783 ein Gitter- und Säulenwerk als Rankgerüst zeigt.

Gemeinsam ist den bekannten Lösungen, daß hier die Säulenbögen, Verbindungsköpfe oder dgl. als werkseitig fertiggestellte Körper ausgebildet sind, die vom Benutzer zu Raumtragwerken zusammengestellt werden können, wobei häufig nur ein professioneller Aufbau möglich ist, für Heimwerker stellt die Montage häufig ein nicht zu lösendes Problem dar.

Ein weiterer Nachteil besteht in dem zwangsläufig sehr großen Raumbedarf, den die Einzelelemente der bekannten Lösungen bei Vorratshaltung, Transport und Lagerung sowohl beim Hersteller als auch in den Verkaufsstätten beanspruchen.

Aufgabe der Erfindung ist daher die Schaffung einer Lösung, mit der zum einen die Montage der einzelnen Elemente aneinander vereinfacht, insbesondere aber auch die Lagerhaltung minimiert und die Herstellung vereinfacht wird.

Bei einem Bausatz der eingangs bezeichneten Art wird diese Aufgabe gemäß der Erfindung dadurch gelöst, daß jedes Einzelelement aus zwei Gittermattenelementen bzw. Halbgittern gebildet ist, wobei jedes Halbgitter aus flächigen Gittermatten mit Längsdrähten und Querdrähten gebildet ist und daß korrespondierende freie Drahtenden der Querdrähte der Gittermatten zur Bildung eines Einzelelementes über Kupplungsglieder miteinander in der Gebrauchslage verbunden sind.

Die Erfindung hat gegenüber den bekannten Lösungen ganz erhebliche Vorteile. Da die Halbgitter erst am Ort des Gebrauchs zu Einzelelementen zusammengestellt werden, können sie für den Transport, die Lagerung, die Zurschaustellung und dgl. mehr auf einem vergleichsweise geringen Raum gelagert bzw. ausgestellt werden. Bei einem entsprechend gewählten Rastermaß können die Halbgitter auf sogenannten Europaletten werkseitig verpackt werden und bieten dann der Verkaufsstätte, etwa einem Baumarkt oder einem Gärtnerfachgeschäft, die Möglichkeit einfacher Lagerung und Darbietung an die potentiellen Käufer.

In Ausgestaltung sieht die Erfindung vor, daß, die freien Enden der Querdrähte der Aufnahme der Kupplungselemente und nach Umfalzung zum Verbinden mit dem korrespondierenden anderen Halbgitter dienen.

Die so gestalteten Halbgitter lassen sich werkseitig in einfacher Weise aus Gittertafeln herstellen. Es genügt zunächst, entsprechende Gittertafeln aus Drähten durch Schweißen zu erzeugen und wenigstens einen Teil der freien Querdrahtenden abzuwinkeln.

Die Erfindung sieht auch vor, daß die Kupplungsglieder als Stangen mit gelochten Verbindungslaschen an ihren freien Enden ausgebildet sind. Diese Ausgestaltung hat den besonderen Vorteil, daß durch diese stangenförmigen Kupplungsglieder gleichzeitig Elemente des Raumfahrdrahtes zur Verfügung gestellt werden. Wird beispielsweise vom Handel dem Kunden die Möglichkeit eröffnet, Kupplungsglieder unterschiedlicher Länge zu erwerben, so kann er damit raumgitterförmige Raumtragwerke unterschiedlicher Abmessungen in einer der Erstreckungen ohne weiteres bilden.

Die Erfindung sieht auch vor, daß mindestens eine der gelochten Laschen in einem freien Bündel zur axialen Erstreckung angeordnet ist und zwei Steckbohrungen aufweist. Damit kann ein derartiges Kupplungsglied durch die Aufnahme der freien Drahtenden der beispielsweise Querdrähte zur Raumtragwerkbildung beitragen. Die weitere Steckbohrung ist geeignet, um das Fallende eines Querdrahtes eines Nachbarheizgitters aufzunehmen, so daß benachbarte Gittermatten aneinander gekuppelt werden können.

Diese Gestaltung hat den besonderen Vorteil, daß mit im Prinzip lediglich zwei Grundelemente, nämlich dem Grundelement die Taumatte und dem Grundelement Kupplungsglied eine Vielzahl von Raumstrukturen vom Endverbraucher zusammengestellt werden können ohne daß es dazu weiterer Hilfsmittel bedarf. Beispiele derartiger Raumtragwerke sind in den Figuren dargestellt.

Die Erfindung sieht auch vor, daß die freien Enden wenigstens eines Teiles der Querdrähte nach Abwinkeln einen Diagonalverlauf zur Bildung von Flächen- oder Raumdiagonalen aufweisen.

Das Abwinkeln der freien Enden der Querdrähte muß nicht zwingend im rechten Winkel relativ zur Hauptebene des Gitters vorgenommen werden, um Halbgitter bilden zu können, die miteinander verbunden ein Einzelelement des Bausatzes bilden. So sieht die Erfindung auch vor, daß die freien Enden wenigstens eines Teiles der Querdrähte nach dem Abwinkeln einen Diagonalverlauf aufweisen oder daß neben Längsund Querdrähten Diagonaldrähte zur Bildung von Flächen oder Raumdiagonalen vorgesehen sind.

Die Längs- und Querdrähte müssen auch nicht, wie bei üblichen Drahtgittern, rechtwinklig zueinander verlaufen, sie können auch einen vom rechtwinkligen Verlauf abweichenden Verlauf zueinander aufweisen, wie dies die Erfindung in Ausgestaltung ebenfalls vorsieht.

Die Längsdrähte können wenigstens zum Teil einen bogenförmigen Verlauf haben, derart, daß zwei solche Halbgitter zusammengefügt ein Einzelelement in Bogenform bilden.

Um dem Benutzer des Bausatzes eine einfache Montage zu ermöglichen, sieht die Erfindung auch vor, daß die Verbindung der Halbgitter über auf die freien Enden der Stäbe schiebbare Kupplungen erfolgt, die erfindungsgemäß unterschiedliche Gestaltungen aufweisen können.

Die Kupplungen können als Kleb-, Steck-, Quetsch- oder Klemmkupplungen ausgebildet sein, es kann sich auch um Verschraubungen, um Hülsen mit Klemmkeilen und dgl. handeln.

Um baukastenähnlich eine Vielzahl von Elementen in unterschiedlichen Raumstrukturen miteinander verbinden zu können, sieht die Erfindung auch vor, daß der Abstand der Längsdrähte zueinander und/oder der Abstand der Querdrähte zueinander in einem Rastermaß vorgesehen ist.

So kann beispielsweise der Abstand zweier Längsdrähte so groß sein, daß ein drahtfreies Feld entsteht, was der Stirnfläche eines anderen Einzelelementes entspricht, so daß hier eine direkte Verbindung möglich gemacht wird.

Die Erfindung ist nachstehend anhand der Zeichnung beispielsweise näher erläutert. Diese zeigt in

Fig. l und 2 eine räumliche Darstellung als Ausschnitt aus einem Rankgerüst im Verbindungsbereich zweier benachbarter Elemente,

Fig. 3 bis 4 unterschiedliche Anordnungen benachbarter Rankgerüstelemente,

Fig. 5 und 6 Vorderansicht und Aufsicht auf einen Ausschnitt auf ein Rankgerüst,

Fig. 7 bis ll Gestaltungsvarianten von Einzelelementen,

Fig. 12, 13 und 14 drei Einzelelementgestaltungen aus zwei Halbgittern,

Fig. 15 eine vergrößerte Darstellung eines Einzelelementes mit Raumdiagonale,

Fig. 16 bis 23 unterschiedliche Ausführungsformen von Kupplungen zum Verbinden benachbarter Halbgitter und/oder zum Verbinden benachbarter Einzelelemente sowie in

Fig. 24 eine Gestaltungsmöglichkeit einer Laube oder dgl. mit dem erfindungsgemäßen Bausatz.

Das in der letzten Fig. 24 allgemein mit 2 bezeichnete Rankgerüst wird aus Einzelelementen 1 beliebig zusammengefügt. Um dies zu erreichen, bestehen im Falle der Fig. l die Einzelelemente l je aus zwei Gittermattenelementen 3a und 3b, die ihrerseits wiederum aus Längsdrähten 4 und Querdrähten 5 ähnlich eines Baustahlmattengewebes gebildet sind. Zur Bildung eines Raumtragwerkes in Form eines Einzelelementes l sind die Gittermattenelemente 3a und 3b über Kupplungsglieder 6 miteinander verbunden, deren spezielle Ausgestaltung in den Fig. 5 und 6 etwas näher dargestellt ist.

Die endseitigen Kupplungsglieder 6 können gleichzeitig zur Verbindung benachbarter Einzelelemente l dienen, wie sich dies aus den Fig. l bis 4 ergibt. Die Verbindung sei es benachbarter Gittermatten oder Halbgitter 3a bzw. 3b mit Hilfe der Kupplungsglieder 6 wird dadurch möglich, daß die Kupplungsglieder selbst als Stangen 18 ausgebildet sind mit einer Einfachlasche 19 an einem Ende und einer Doppellasche 20 am anderen Ende, wobei ein Laschenelement 20a der Doppellasche 20 in einem 45° Winkel zur Hauptachse der Stange 18 abgewinkelt ist. Die Laschen 19 bzw. 20 tragen Durchstecklöcher 21 für die mit 7 bezeichneten Drahtenden der Querdrähte 5. Nach Überschieben der Kupplungsglieder 6 über die freien Enden 7 werden diese dann abgebogen, etwa gemäß den Pfeilen 22 in Fig. 6.

Wie sich aus Fig. 5 oben rechts ergibt, ist bei der normalen Kupplung der abgewinkelte Laschenteil 20a frei, so daß das dort vorgesehene weitere Durchsteckloch 21a eine andere Funktion übernehmen kann. Hier kann beispielsweise das freie Ende 7 eines Querstabes 5 eines benachbarten Elementes l eingesteckt werden, um so benachbarte Elemente miteinander zu verbinden, wie sich dies aus den Fig. l bis 4 ergibt. Die jeweiligen Kupplungsbereiche sind durch einen gestrichelten Pfeil 23 gekennzeichnet.

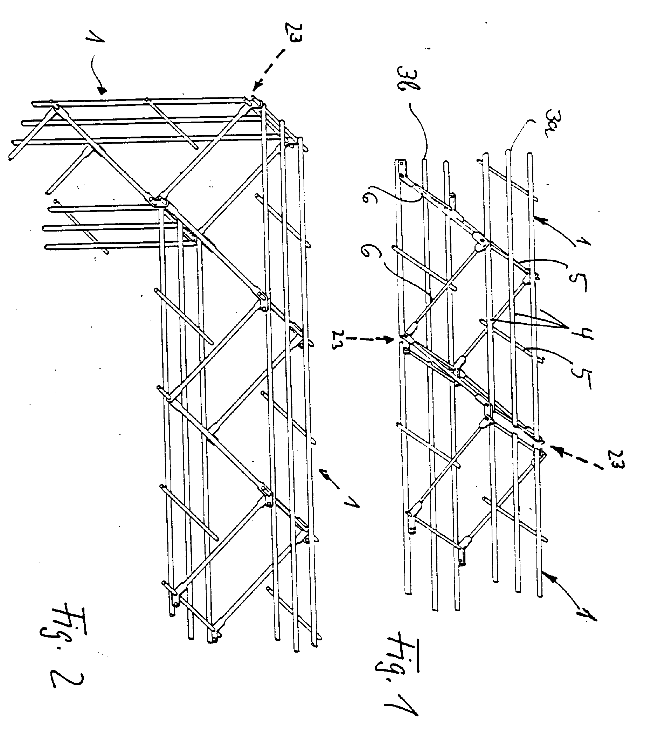

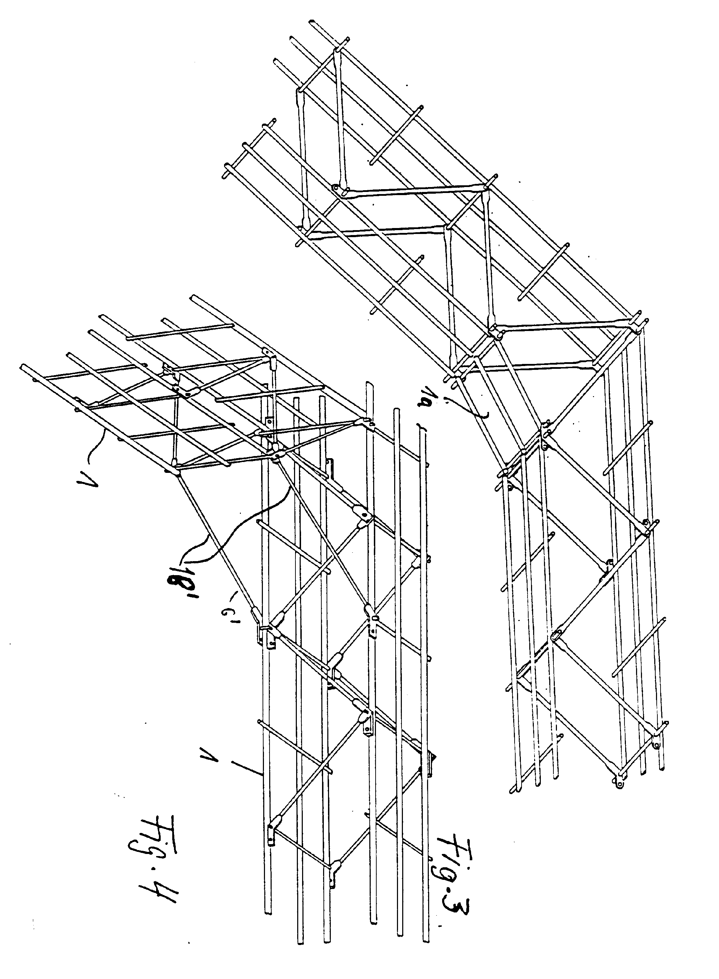

Zeigt Fig. l eine fluchtende Anordnung benachbarter Elemente l, so zeigt Fig. 2 deren Anordnung im rechten Winkel. Fig. 3 zeigt die Anordnung in einem vom rechten Winkel abweichenden Winkel, wobei dort ein zusätzliches Gitterelement la zwischengesetzt ist. Fig. 4 zeigt schließlich die nebeneinander angeordnete Anordnung derartiger Elemente, wobei die Überbrückung durch Kupplungselemente 6′ erfolgt mit besonders langen Stangen l8′. An dieser Stelle sei darauf hingewiesen, daß in den Fig. l bis 4 die freien Enden 7 aus Querdrähten 5 nicht abgebogen dargestellt sind.

Wie erkennbar kann mit dem hier beschriebenen System eine Fülle von Raumkonstruktionen erstellt werden, wobei lediglich eine ganz geringe Anzahl an Grundelementen zur Verfügung gestellt werden müssen, nämlich Drahtgitter 3a bzw. 3b und Kupplungsglieder 6 mit ggf. unterschiedlich langen Stangen l8.

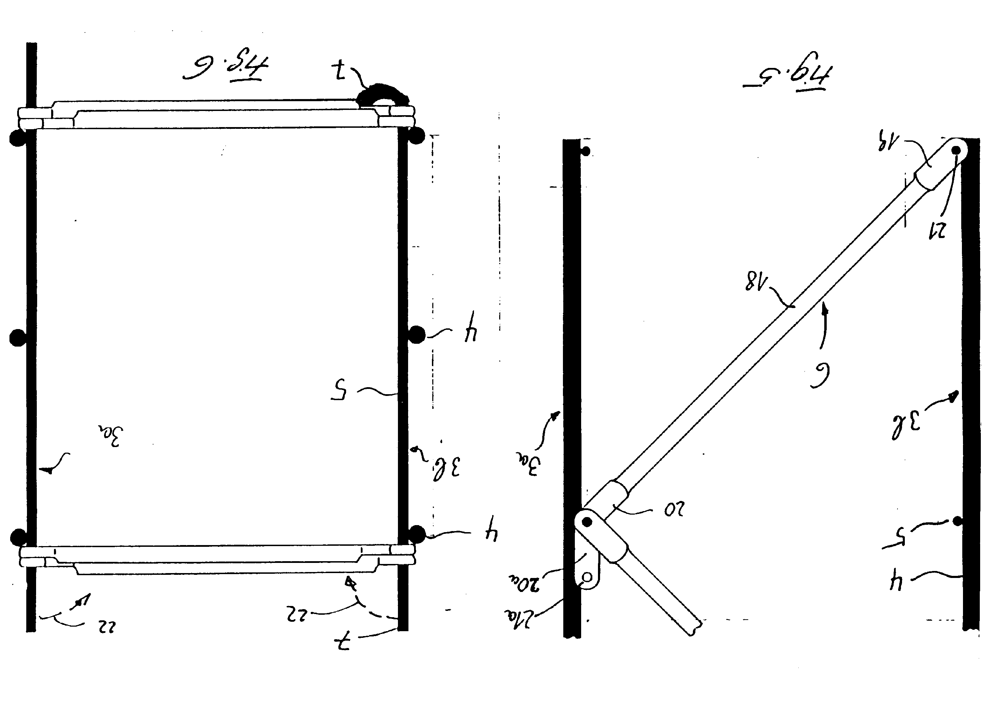

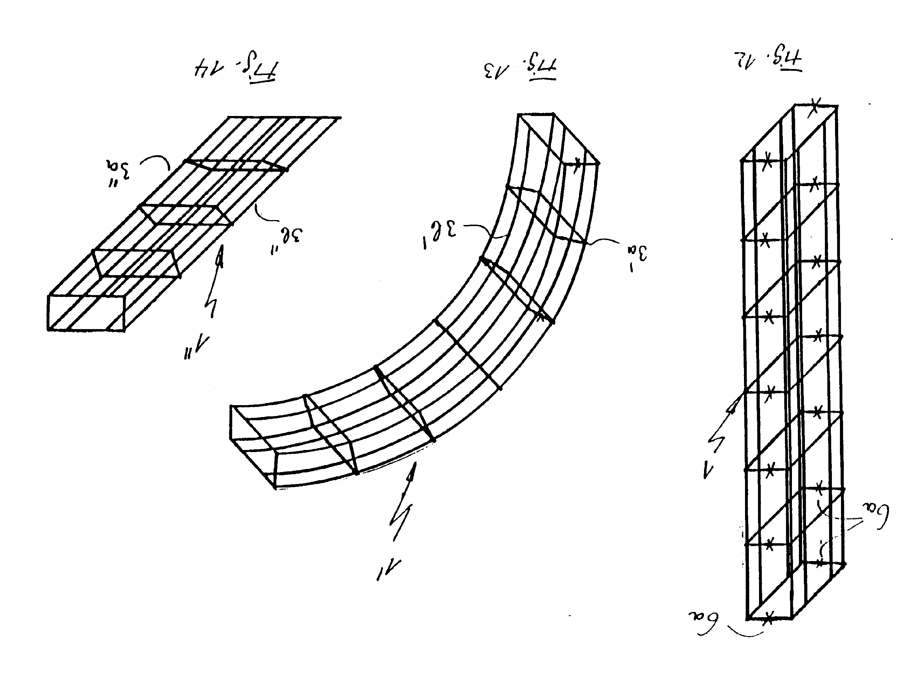

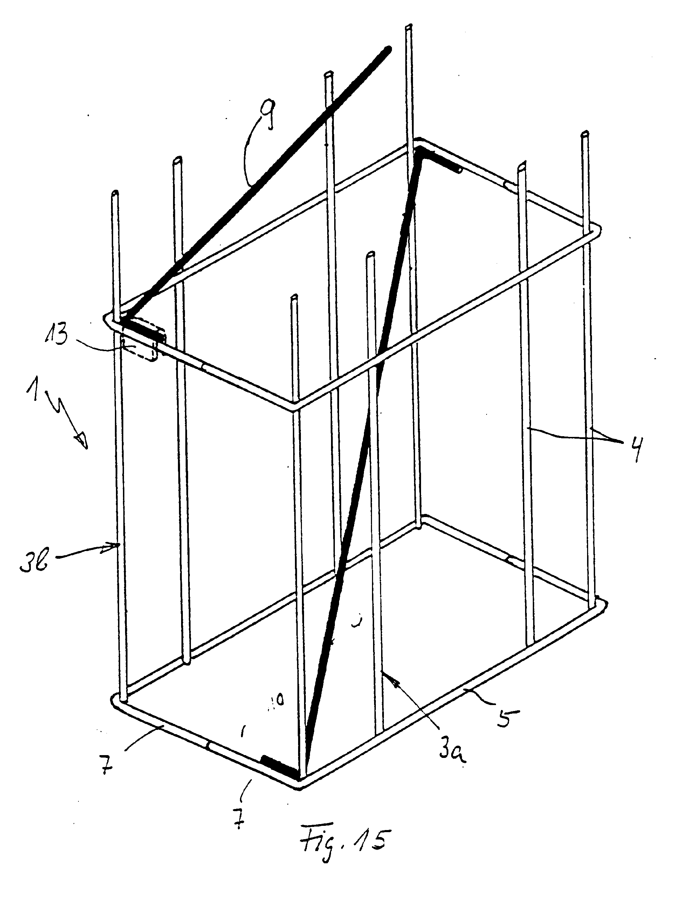

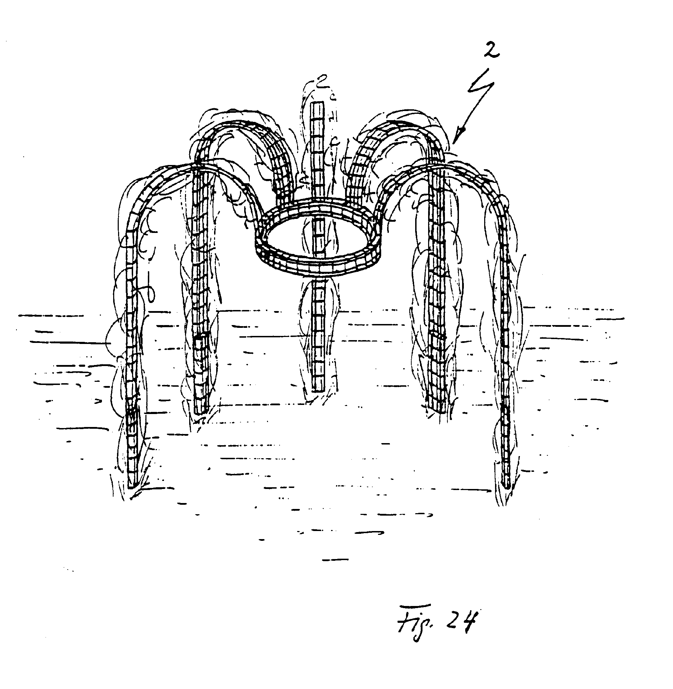

In den Fig. 7 bis 26 sind Gestaltungsvarianten sowohl der Gitterelemente bzw. Halbgitter 3a und 3b wie auch der Kupplungselemente 6 wiedergegeben. Die funktionsmäßig gleichen Teile tragen das gleiche Bezugszeichen, wie bei den Ausführungsbeispielen gemäß den Fig. l bis 6.

Das in Fig. 7 nur zum Teil dargestellte Einzelelement besteht aus einem Halbgitter 3a und einem anderen Halbgitter 3b; diese wiederum bestehen aus Längsdrähten 4 und Querdrähten 5.

Die Halbgitter 3a und 3b werden zu einem Einzelelement verbunden; dazu dienen in den Fig. 7 bis ll nicht näher dargestellte Kupplungen 6a und 6d.

Zur Verbindung der Halbgitter 3a und 3b sind die mit 7 bezeichneten freien Enden der Querdrähte 5 im Beispiel der Fig. 7 senkrecht aus der Hauptebene der Halbgitter 3a und 3b abgewinkelt und können daher stirnseitig an den freien Enden über Kupplungen 6a - Beispiele davon ergeben sich aus den Fig. l6 bis 23 - miteinander verbunden werden.

Fig. l3 zeigt bogenförmige Halbgitter 3a′ und 3b′, mit denen die Längsdrähte 4′ gekrümmt ausgebildet sind, etwa in der Weise, daß sich ein bogenförmiges Einzelelement l′ ergibt. Der dargestellte Bogen soll als Viertelkreisbogen gestaltet sein, ohne daß die Erfindung hierauf beschränkt wäre.

Zur Bildung von Schrägen mit stirnflächigen Bereichen, die im Winkel von 90° zueinander stehen, können Halbgitter 3a″ und 3b″ gemäß Fig. l4 zusammengefügt werden.

In den Fig. 8 bis ll sind abgewandelte Ausführungen der Halbgitter 3a und 3b dargestellt. So zeigt die Fig. 8 eine Lösung, derart, daß die zweiten und folgenden Querdrähte 5a doppellagig ausgebildet sind, während der stirnseitige untere und obere Querdraht 5b einlagig ausgebildet ist, um beim Zusammenfügen benachbarter Einzelelemente auch im Verbindungsbereich die Zweilagigkeit zu gewährleisten.

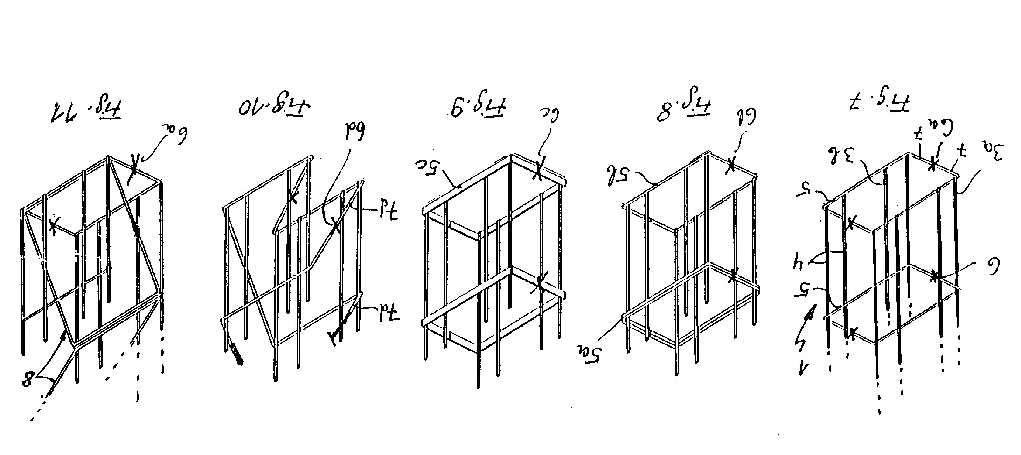

In Fig. 9 ist der Querdraht durch ein Querband 5c ersetzt worden, während in Fig. l0 die freien Enden 7 schräg abgewinkelt sind, so daß sich Diagonalen beim Zusammenfügen über Kupplungen 6 ergeben. In Fig. ll weisen die Halbgitter 3a und 3b nur an ihren Schmalseiten Querdrähte 5 mit freien Enden 7 auf; die restlichen innen liegenden Querdrähte haben keine freien Enden. Zur Stabilisierung des Einzelelementes sind rechteckige Drahtbügel 8 von jedem zweiten Querdraht 5 ausgehend diagonal eingefügt.

Bezugnehmend auf Fig. l5 ist eine weitere Variante dargestellt, die ein versteifende Raumdiagonale vorsieht. Hier wird ein Diagonaldraht 9 mit freien Enden l0 eingebaut, etwa durch Kupplungen, wie sie in Fig. 20 und 2l dargestellt sind, die zum Ergreifen von wenigstens zwei Stabquerschnitten ausgebildet sind.

Um entweder die freien Enden 7 der Querdrähte 5 miteinander zu verbinden oder die Stirnseiten zweier Einzelelemente l, können unterschiedliche Verbindungstechniken herangezogen werden. Die Fig. l6 bis 23 zeigen hier nur einige Beispiele, ohne daß die Erfindung auf diese Beispiele beschränkt wäre.

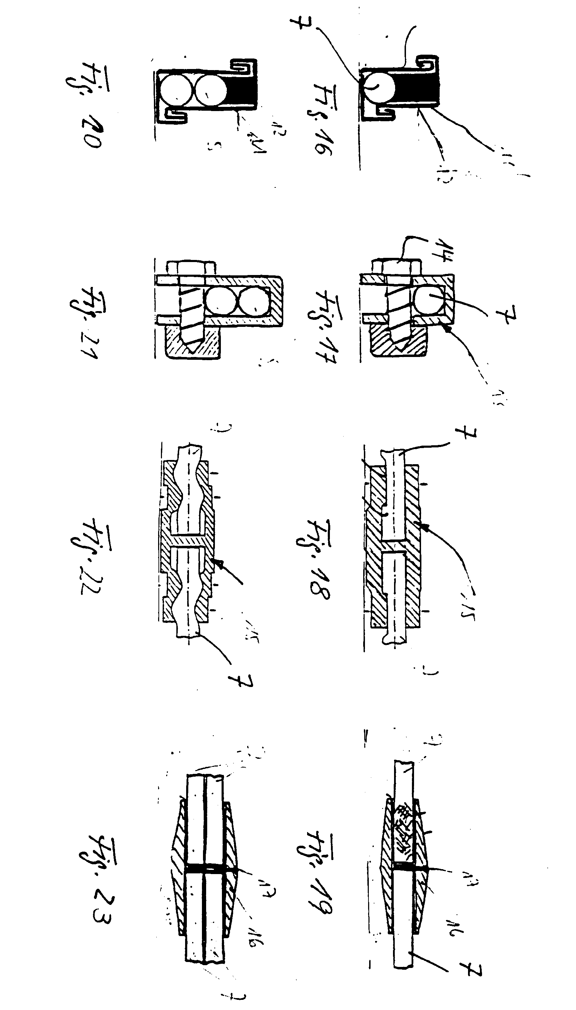

In Fig. 16 und 20 sind aus Profilen ll gebildete Klemmgehäuse dargestellt, die zum einen die freien Enden 7 zweier Halbgitter 3a und 3b (Fig. l6), zum anderen die stirnseitigen Querdrähte 5 zweier Einzelelemente (Fig. 20) oder das freie Ende 7 eines Querdrahtes 5 mit dem freien Ende l0 eines Diagonaldrahtes 9 (Fig. l5) miteinander verbinden; dabei werden Klemmkräfte durch Eintreibkeile 12 erzeugt.

Entsprechendes bewirken die in Fig. 17 und 2l dargestellten U-Profile l3; die Klemmkräfte werden hier durch Blechschrauben erzeugt.

Die Fig. l8 und 22 zeigen Quetschverbinder l5, wie sie u.a. in der Elektrotechnik zum Verbinden von Kabeln verwendet werden. Für diese Verbindungstechnik sind die freien Enden 7 entweder gekerbt, genietet (Fig. l8) oder gestaucht, gewellt (Fig. 22); das Quetschen erfolgt z.B. mit einer Wasserpumpenzange.

Letztlich zeigen Fig. l9 und 23 Kunststoffgehäuse l6, in welche die freien Enden 7 eingeführt und verklebt sind; der Kleber wird durch eine Bohrung 17 im Kunststoffgehäuse verpreßt.

Natürlich sind die beschriebenen Ausführungsbeispiele der Erfindung noch in vielfacher Hinsicht abzuändern, ohne den Grundgedanken zu verlassen. Entscheidend ist die Bildung der Einzelelemente l aus zwei Teilgittern, wobei als Beispiel die Fig. 24 zeigt, wie übereinstimmende Einzelelementtypen zu Gitter-/Raumtragwerken gestaltbar sind.

Neben dem Einsatz im Gartenbau lassen sich hier noch andere Einsatzfälle denken, etwa im Laden- und Ausstellungspavillonbau, im Möbelbau und dgl. mehr.


**Patentansprüche**


l. Bausatz zur Bildung eines Gitter-/Raumtragwerkes, insbesondere zur Bildung eines Rankgerüstes (2) für Kletter- oder Rankpflanzen, welches aus aus Metalldrahtgittern (3) gebildeten, miteinander verbindbaren Einzelelementen (l) besteht,
dadurch gekennzeichnet,

daß jedes Einzelelement (I) aus zwei Gittermattenelementen bzw. Halbgittern (3a, 3b) gebildet ist, wobei jedes Halbgitter aus flächigen Gittermatten (3a, 3b) mit Längs- und Querdrähten (4 und 5) gebildet ist und daß korrespondierende freie Drahtenden (7) der Querdrähte (5) der Gittermatten (3a, 3b) zur Bildung eines Einzelelementes über Kupplungsglieder (6) miteinander in der Gebrauchslage verbunden sind.

2. Bausatz nach Anspruch I,
dadurch gekennzeichnet,
daß die freien Enden (7) der Querdrähte der Aufnahme der Kupplungselemente nach Abwikelung zum Verbinden mit dem korrespondierenden anderen Halbgitter dienen.

3. Bausatz nach Anspruch I oder 2,
dadurch gekennzeichnet,
daß die Kupplungsglieder (6) als Stangen (I8) mit gelochten Verbindungslaschen (I9,20) an ihren freien Enden ausgebildet sind.

4. Bausatz nach Anspruch 3,
dadurch gekennzeichnet,
daß wenigstens eine der gelochten Laschen (20 bzw. 20a) in einem Winkel zur axialen Erstreckung angeordnet ist und zwei Steckbohrungen (2I) aufweist.

5. Bausatz nach einem der vorangehenden Ansprüche,
dadurch gekennzeichnet,
daß die freien Enden (7) wenigstens eines Teiles der Querdrähte nach Abwinkeln einen Diagonalverlauf zur Bildung von Flächen- oder Raumdiagonalen aufweisen.

6. Bausatz nach einem der vorangehenden Ansprüche,
dadurch gekennzeichnet,
daß die Längs- und Querdrähte (4,5) einen vom rechtwinkligen Verlauf abweichenden Verlauf zueinander aufweisen.

7. Bausatz nach einem der vorangehenden Ansprüche,
dadurch gekennzeichnet,
daß die Verbindung von Halbgittern (3a,3b) über auf die freien Enden (7) der Querdrähte (5) schiebbare Kupplungen (6a, 11-17) als Klemm-, Schraub-, Quetsch- oder Klebverbinder erfolgt.

8. Bausatz nach einem der vorangehenden Ansprüche,
dadurch gekennzeichnet,
daß der Abstand der Längsdrähte (4) zueinander und/oder der Abstand der Querdrähte (5) zueinander in einem abgestimmten Rastermaß vorgesehen ist.

## Claims

I. A building set for the construction of a lattice/space frame structure, in particular for the construction of a climbing frame (2) for climbing or creeper plants, which comprises individual elements (I) which can be connected together and which are formed from metal wire lattices (3), characterised in that each individual element (I) is formed from two lattice mat elements or half-lattices (3a, 3b), wherein each half-lattice is formed from flat lattice mats (3a, 3b) with longitudinal and transverse wires (4 and 5), and that corresponding free wire ends (7) of the transverse wires (5) of the lattice mats (3a, 3b) are connected together in the position of use by way of coupling members (6) to form an individual element.

2. A building set according to claim I characterised in that the free ends (7) of the transverse wires serve for receiving the coupling elements after bending for connecting to the corresponding other half-lattices.

3. A building set according to claim I or claim 2 characterised in that the coupling members (6) are in the form of bars (I8) with apertured connecting plates (I9, 20) at their free ends.

4. A building set according to claim 3 characterised in that at least one of the apertured plates (20 or 20a) extends at an angle to the axial extent and has two insertion bores (2I).

5. A building set according to one of the preceding claims characterised in that the free ends (7) of at least a part of the transverse wires, after bending, are in a diagonal configuration to form planar or three-dimensional diagonals.

6. A building set according to one of the preceding claims characterised in that the longitudinal and transverse wires (4, 5) are in a configuration relative to each other which deviates from a right-angled configuration.

7. A building set according to one of the preceding claims characterised in that the connection of half-lattices (3a, 3b) is effected by way of couplings (6a, II-I7) which can be pushed on to the free ends (7) of the transverse wires (5), as clamping, screwing, squeeze or adhesive connectors.

8. A building set according to one of the preceding claims characterised in that the spacing of the longitudinal wires (4) relative to each other and/or the spacing of the transverse wires (5) relative to each other is in a co-ordinated pitch dimension.

## Revendications

1. Jeu de construction ou ensemble de pièces de construction destiné à la formation d'une ossature grillagée tridimensionnelle, notamment pour la formation d'une structure (2) destinée à supporter des plantes grimpantes ou plantes à sarments, laquelle structure est formée par des grilles en fils métalliques (3), par des éléments individuels pouvant être reliés entre eux (1),
caractérisé en ce que
chaque élément individuel (1) est formé par deux éléments de plaque de treillis ou semi-treillis (3a, 3b), chaque semi-treillis est constitué par des plaques de treillis aplaties (3a, 3b) avec des fils longitudinaux et transversaux (4 et 5) et en ce que les extrémités de fils libres correspondantes (7) des fils transversaux (5) des plaques de treillis (3a, 3b) sont reliées entre elles dans la position d'utilisation par des éléments d'accouplement (6).

2. Jeu de construction ou ensemble de pièces de construction selon la revendication 1,
caractérisé en ce que
les extrémités libres (7) des fils transversaux destinées à recevoir les éléments d'accouplement servent après pliage à l'angle pour liaison avec les autres demi-treillis correspondants.

3. Jeu de construction ou ensemble de pièces de construction selon la revendication 1 ou 2,
caractérisé en ce que
les éléments d'accouplement (6) sont conçus sous forme de barres (18) munies d'éclisses de liaison perforées (19, 20) sur leurs extrémités libres.

4. Jeu de construction ou ensemble de pièces de construction selon la revendication 3,
caractérisé en ce que
au moins l'une des éclisses perforées (20 ou 20a) est agencée selon un angle par rapport à la direction axiale et comporte deux alésages enfichables (21).

5. Jeu de construction ou ensemble de pièces de construction selon l'une des revendications précédentes,
caractérisé en ce que
les extrémités libres (7) au moins d'une partie des fils transversaux présentent après déroulement un tracé diagonal pour la formation de diagonales planaires ou tridimensionnelles.

6. Jeu de construction ou ensemble de pièces de construction selon l'une des revendications précédentes,
caractérisé en ce que
les fils longitudinaux et transversaux (4, 5) présentent un tracé s'écartant du tracé à angle droit.

7. Jeu de construction ou ensemble de pièces de construction selon l'une des revendications précédentes,
caractérisé en ce que
la liaison des demi-treillis (3a, 3b) s'effectue sur les extrémités libres (7) des fils transversaux (5) par des accouplements enfichables (6a, 11-17) sous forme d'éléments de liaison par coincement, vissage, écrasement ou collage.

8. Jeu de construction ou ensemble de pièces de construction selon l'une des revendications précédentes,
caractérisé en ce que
la distance entre les fils longitudinaux (4) et/ou la distance des fils transversaux (5) entre eux est prévue par un gabarit dimensionnel modulaire coordonné.

Fig. 2

Fig. 1

Fig.3

Fig.4

fig.5

fig.6

EP 0 386 402 B1

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24